# EUROPÄISCHE PATENTSCHRIFT

(11) **EP 4 636 177 B1**
(45) Veröffentlichungstag und Bekanntmachung des Hinweises auf die Patenterteilung: **09.12.2026**
(21) Anmeldenummer: 25157068.5
(22) Anmeldetag: 11.02.2025
(51) Int. Cl.: E03C 1/04, C02F 1/00

(54) **SANITÄRARMATUR UND VERFAHREN ZUM BETRIEB DER SANITÄRARMATUR**
SANITARY FITTING AND METHOD FOR OPERATING THE SANITARY FITTING
ROBINETTERIE SANITAIRE ET PROCÉDÉ DE FONCTIONNEMENT DE LA ROBINETTERIE SANITAIRE

(30) Priorität: 15.04.2024 DE 102024110493
(43) Veröffentlichungstag der Anmeldung: 22.10.2025
(73) Patentinhaber: Grohe AG, 58675 Hemer (DE)
(72) Erfinder: Schönbeck, Heiko, 58675 Hemer (DE); Lukas, Reisig, 58091 Hagen (DE); JURCZYK, Marc, 59423 Unna (DE); Voeller, Martin, 58675 Hemer (DE)

(56) Entgegenhaltungen:
- WO-A1-02/085494
- WO-A1-2020/021393
- US-A1- 2020 384 485

## Beschreibung

Die vorliegende Erfindung betrifft eine Sanitärarmatur und ein Verfahren zum Betrieb der Sanitärarmatur. Mittels der Sanitärarmatur ist Wasser an Duschen, Waschbecken, Spülbecken und/oder Badewannen bedarfsgerecht bereitstellbar.

Sanitärarmaturen können Flüssigkeitsfilter aufweisen, durch die physikalische Verunreinigung, wie Sand, Rost oder andere Partikel, aus dem Wasser entfernbar sind. Manche Flüssigkeitsfilter können Chlor, bestimmte organische Verbindungen oder andere Substanzen entfernen oder reduzieren, die den Geschmack oder Geruch des Wassers beeinträchtigen können. In Gegenden mit hartem Wasser können Flüssigkeitsfilter verwendet werden, um Kalkablagerungen zu minimieren. Bestimmte Flüssigkeitsfilter können Bakterien, Viren oder andere Mikroorganismen aus dem Wasser entfernen. Einige Flüssigkeitsfilter können Schwermetalle wie Blei, Kupfer und andere aus dem Wasser filtern, die gesundheitsschädlich sein können. Durch den Einsatz von Flüssigkeitsfiltern in Sanitärarmaturen kann die Qualität und Sicherheit des Wassers erhöht sowie eine Lebensdauer und Funktionsfähigkeit der Sanitärarmaturen verbessert werden. Eine gattungsgemässe Sanitärarmatur ist in WO2020/021393 beschrieben.

Nachteilig an den bekannten Sanitärarmaturen ist, dass durch einen Benutzer der Sanitärarmatur nicht zuverlässig erkennbar ist, wann die Lebensdauer des Flüssigkeitsfilters abgelaufen ist.

Aufgabe der Erfindung ist es daher, die mit Bezug auf den Stand der Technik geschilderten Probleme zumindest teilweise zu lösen und insbesondere eine Sanitärarmatur anzugeben, die eine zuverlässigere Anzeige des Ablaufs der Lebensdauer des Flüssigkeitsfilters ermöglicht. Zudem soll ein Verfahren zum Betrieb der Sanitärarmatur angegeben werden, das eine zuverlässigere Anzeige des Ablaufs der Lebensdauer des Flüssigkeitsfilters ermöglicht.

Diese Aufgaben werden gelöst mit einer Sanitärarmatur und einem Verfahren gemäß den Merkmalen der unabhängigen Patentansprüche. Weitere vorteilhafte Ausgestaltungen der Erfindung sind in den abhängigen Patentansprüchen Darüber hinaus werden die in den Patentansprüchen angegebenen Merkmale in der Beschreibung näher präzisiert und erläutert, wobei weitere bevorzugte Ausgestaltungen der Erfindung dargestellt werden.

Hierzu trägt eine Sanitärarmatur bei, die zumindest Folgendes aufweist:
- ein Armaturengehäuse mit zumindest einem Flüssigkeitszulauf und zumindest einem Flüssigkeitsablauf;
- eine Wasserführung mit einer Filteröffnung für einen Flüssigkeitsfilter;
- eine Kappe zum Verschließen der Filteröffnung, wobei die Kappe in eine Filter-in-Stellung und eine Filter-raus-Stellung verstellbar ist; und
- einen Sensor zur Detektion der Stellung der Kappe.

Die Sanitärarmatur kann beispielsweise als Thermostatmischarmatur, Auf-Putz-Brausethermostatarmatur, Auf-Putz-Wannenthermostatarmatur, Auf-Putz-Duschsystem und/oder Auf-Putz-Wannensystem ausgebildet sein. Die Sanitärarmatur dient insbesondere der bedarfsgerechten Bereitstellung von Wasser in einer Dusche, in einer Badewanne, an einem Waschbecken und/oder an einem Spülbecken.

Die Sanitärarmatur weist ein Armaturengehäuse auf. Das Armaturengehäuse kann zumindest teilweise aus Kunststoff und/oder Metall, wie zum Beispiel Messing oder einer Zinklegierung, bestehen. Das Armaturengehäuse ist insbesondere an einem Träger, wie zum Beispiel einer Wand, einer Gebäudewand, der Dusche, der Badewanne, dem Waschbecken oder dem Spülbecken, befestigbar. Das Armaturengehäuse weist zumindest einen Flüssigkeitszulauf auf. Beispielsweise kann das Armaturengehäuse einen ersten Flüssigkeitszulauf für Kaltwasser und einen zweiten Flüssigkeitszulauf für Warmwasser aufweisen. Das Kaltwasser und das Warmwasser können einem Mischventil der Sanitärarmatur zuführbar sein. Das Mischventil kann zumindest teilweise in dem Armaturengehäuse angeordnet sein. Das Mischventil kann über eine Kaltwasserleitung mit dem ersten Flüssigkeitszulauf und über eine Warmwasserleitung mit dem zweiten Flüssigkeitszulauf verbunden sein. Das Mischventil kann ein Thermostatmischer oder eine Thermostatmischkartusche sein. Durch das Mischventil sind das Kaltwasser und das Warmwasser zu Mischwasser mit einer gewünschten Mischwassertemperatur mischbar. Die Mischwassertemperatur ist insbesondere durch ein Regelelement, beispielsweise nach Art eines Dehnstoffelements, des Mischventils regelbar. Die Warmwassertemperatur des Warmwassers beträgt insbesondere maximal 90 °C, bevorzugt 25 °C bis 90 °C, besonders bevorzugt 55 °C bis 65 °C und/oder die Kaltwassertemperatur des Kaltwassers insbesondere maximal 25 °C (Celsius), bevorzugt 1 °C bis 25 °C, besonders bevorzugt 5 °C bis 20 °C.

Das Armaturengehäuse weist zumindest einen Flüssigkeitsablauf auf. Über den zumindest einen Flüssigkeitsablauf ist die Sanitärarmatur, beispielsweise über einen flexiblen Schlauch und/oder eine Rohrleitung, mit zumindest einer Flüssigkeitsabgabeeinrichtung, beispielsweise einer Brause, einer Handbrause, einer Kopfbrause und/oder zumindest einer Düse, verbindbar. Der zumindest eine Flüssigkeitsablauf kann ein Gewinde zum Befestigen des Schlauchs oder der Rohrleitung aufweisen. Das Armaturengehäuse kann eine Mehrzahl von Flüssigkeitsabläufen aufweisen, über die die Sanitärarmatur mit einer Mehrzahl von Flüssigkeitsabgabeeinrichtungen verbindbar ist. Beispielsweise kann das Armaturengehäuse drei Flüssigkeitsabläufe aufweisen. Die Mischarmatur kann zumindest ein Ventil zur Steuerung einer Abgabe des Wassers bzw. des Mischwassers über den zumindest einen Flüssigkeitsablauf aufweisen.

Die Sanitärarmatur weist eine Wasserführung mit einer Filteröffnung für einen Flüssigkeitsfilter auf. Über die Wasserführung ist das Wasser bzw. das Mischwasser (zumindest teilweise) dem zumindest einen Flüssigkeitsablauf zuführbar. Die Wasserführung kann in dem Armaturengehäuse angeordnet sein. Die Wasserführung kann mit dem Mischventil und/oder dem zumindest einen Flüssigkeitsablauf verbunden sein. Die Wasserführung kann zumindest teilweise rohrförmig ausgebildet sein. Die Wasserführung kann zumindest teilweise aus Kunststoff oder Metall, wie zum Beispiel Messing, bestehen. Die Wasserführung kann sich entlang einer, insbesondere geraden, Wasserführungslängsachse von einem ersten längsseitigen Wasserführungsende zu einem zweiten längsseitigen Wasserführungsende erstrecken. Die Filteröffnung kann insbesondere an dem ersten längsseitigen Wasserführungsende der Wasserführung ausgebildet sein. Die Filteröffnung kann mit einer Gehäusefilteröffnung des Armaturengehäuses zumindest teilweise fluchten. Über die Filteröffnung bzw. über die Filteröffnung und die Gehäusefilteröffnung ist ein Flüssigkeitsfilter in der Wasserführung anordenbar oder aus der Wasserführung entnehmbar. Der Flüssigkeitsfilter ist in der Wasserführung von Wasser bzw. dem Mischwasser durchströmbar, sodass das Wasser bzw. das Mischwasser durch den Flüssigkeitsfilter filterbar ist. Der Flüssigkeitsfilter kann als Filterkartusche ausgebildet sein. Durch den Flüssigkeitsfilter sind Verunreinigungen und/oder unerwünschte Substanzen aus dem Wasser bzw. dem Mischwasser filterbar.

Die Sanitärarmatur weist eine Kappe zum Verschließen der Filteröffnung auf. Die Kappe kann zumindest teilweise aus Kunststoff und/oder Metall, wie zum Beispiel Messing, bestehen. Die Kappe kann nach Art eines Stopfens oder eines Verschlusses ausgebildet sein. Die Kappe kann ein Austreten des Wassers bzw. des Mischwassers aus der Wasserführung in das Armaturengehäuse und/oder in eine Umgebung der Sanitärarmatur verhindern. Die Kappe ist lösbar bzw. entfernbar in der Filteröffnung anordenbar. Die Kappe ist aus der Filteröffnung beispielsweise lösbar bzw. entfernbar, um den Flüssigkeitsfilter aus der Wasserführung zu entnehmen und/oder am Ende einer Lebensdauer des Flüssigkeitsfilters oder bei Erreichen einer Verschleißgrenze des Flüssigkeitsfilters den Flüssigkeitsfilter zu ersetzen. Die Kappe kann beispielsweise über eine Schraubverbindung oder eine Bajonettverbindung in der Filteröffnung befestigbar sein.

Die Kappe ist in der Filteröffnung von dem Benutzer oder einem Monteur in eine Filter-in-Stellung und eine Filter-raus-Stellung verstellbar. Insbesondere ist die Kappe in der Filteröffnung zwischen der Filter-in-Stellung und der Filter-raus-Stellung verstellbar. In der Filter-in-Stellung und der Filter-raus-Stellung kann sich die Kappe in der Filteröffnung an unterschiedlichen Positionen befinden und/oder in der Filteröffnung unterschiedlich orientiert sein. Die Kappe wird von dem Benutzer bzw. dem Monteur in die Filter-in-Stellung verstellt, wenn sich in der Wasserführung der Flüssigkeitsfilter befindet, und in die Filter-raus-Stellung verstellt, wenn sich in der Wasserführung kein Flüssigkeitsfilter befindet. In der Wasserführung wird insbesondere kein Flüssigkeitsfilter angeordnet, wenn die Sanitärarmatur filterlos betrieben werden soll. Die Kappe kann eine Beschriftung und/oder zumindest eine Markierung aufweisen, durch die erkennbar ist, ob sich die Kappe in der Filter-in-Stellung oder der Filter-raus-Stellung befindet. Die Beschriftung und/oder die zumindest eine Markierung kann über die Gehäusefilteröffnung sichtbar sein.

Die Sanitärarmatur weist einen Sensor zur Detektion der Stellung der Kappe auf. Durch den Sensor ist insbesondere detektierbar, ob sich die Kappe in der Filter-in-Stellung oder in der Filter-raus-Stellung befindet. Der Sensor kann in dem Armaturengehäuse angeordnet sein. Bei dem Sensor kann es sich um einen elektronischen Sensor und/oder einen IR-Sensor handeln. Wenn der Sensor detektiert, dass sich die Kappe in der Filter-raus-Stellung befindet, d. h., dass sich in der Wasserführung kein Flüssigkeitsfilter befindet, kann eine Anzeige der Sanitärarmatur deaktivierbar sein, über die ein Verbrauchsstatus des Flüssigkeitsfilters, das Ende der Lebensdauer des Flüssigkeitsfilters und/oder das Erreichen der Verschleißgrenze des Flüssigkeitsfilters anzeigbar bzw. signalisierbar ist. Hierdurch ist verhinderbar, dass dem Benutzer ein Wechselbedarf des Flüssigkeitsfilters angezeigt wird, wenn die Sanitärarmatur filterlos bzw. ohne den Flüssigkeitsfilter betrieben wird. Bei der Anzeige kann es sich um zumindest eine LED oder ein Display handeln. Die Anzeige kann an dem Armaturengehäuse angeordnet sein. Die Kappe kann in die Filter-in-Stellung und die Filter-raus-Stellung drehbar sein. Die Kappe kann in der Filteröffnung in die Filter-in-Stellung und die Filter-raus-Stellung drehbar sein. Die Kappe kann zwischen der Filter-in-Stellung und der Filter-raus-Stellung um eine Drehachse drehbar sein, insbesondere in der Filteröffnung. Die Drehachse kann parallel oder koaxial zu der Wasserführungslängsachse verlaufen. Die Kappe kann zwischen der Filter-in-Stellung und der Filter-raus-Stellung beispielsweise um 90° bis 180°, bevorzugt (im Wesentlichen) 90° oder (im Wesentlichen) 180°, um die Drehachse drehbar sein.

Die Stellung der Kappe kann durch den Sensor berührungslos detektierbar sein. Dies kann insbesondere bedeuten, dass der Sensor von der Kappe beabstandet ist und/oder die Kappe nicht kontaktiert.

Die Stellung der Kappe kann durch den Sensor durch Bestimmung eines Abstands detektierbar sein. Die Stellung der Kappe kann durch den Sensor insbesondere durch Bestimmung des Abstands zwischen der Kappe und dem Sensor detektierbar sein. Die Kappe kann derart ausgebildet sein, dass die Kappe zu dem Sensor in der Filter-in-Stellung (insbesondere in einer radialen Richtung und/oder orthogonal zu der Drehachse) einen ersten Abstand und in der Filter-raus-Stellung (insbesondere in der radialen Richtung und/oder orthogonal zu der Drehachse) einen zweiten Abstand aufweist. Der erste Abstand und der zweite Abstand sind insbesondere unterschiedlich. Insbesondere kann der erste Abstand größer als der zweite Abstand sein. Die Stellung der Kappe kann mit Hilfe des Sensors durch eine Längendifferenzmessung bestimmbar sein.

Die Kappe kann eine erste Abstandsdetektionsfläche und eine zweite Abstandsdetektionsfläche aufweisen. In der Filter-in-Stellung kann die erste Abstandsdetektionsfläche in Richtung des Sensors und in der Filter-raus-Stellung die zweite Abstandsdetektionsfläche in Richtung des Sensors orientiert sein.

Die erste Abstandsdetektionsfläche und die zweite Abstandsdetektionsfläche können sich gegenüberliegen. Insbesondere können sich die erste Abstandsdetektionsfläche und die zweite Abstandsdetektionsfläche in Bezug auf die Drehachse gegenüberliegen. Die erste Abstandsdetektionsfläche und die zweite Abstandsdetektionsfläche können auf gegenüberliegenden Seiten der Drehachse angeordnet sein. Die erste Abstandsdetektionsfläche und die zweite Abstandsdetektionsfläche können um (im Wesentlichen) 180° versetzt zueinander ausgebildet sein. Die erste Abstandsdetektionsfläche und/oder die zweite Abstandsdetektionsfläche können zumindest teilweise eben sein und/oder parallel zueinander verlaufen.

Die erste Abstandsdetektionsfläche kann eine erste Distanz zu der Drehachse der Kappe und die zweite Abstandsdetektionsfläche eine zweite Distanz zu der Drehachse der Kappe aufweisen. Die erste Distanz und die zweite Distanz können sich insbesondere in der radialen Richtung und/oder orthogonal zu der Drehachse bemessen. Die erste Distanz und die zweite Distanz können unterschiedlich sein. Die erste Distanz kann kleiner als die zweite Distanz sein.

Die erste Abstandsdetektionsfläche und die zweite Abstandsdetektionsfläche können an einem Aufsatz der Kappe ausgebildet sein. Der Aufsatz kann beispielsweise über eine Rastverbindung, eine Schraubverbindung oder eine Klebeverbindung mit der Kappe verbunden sein.

Die Sanitärarmatur kann eine Filterstatusüberwachungseinrichtung aufweisen. Bei der Filterstatusüberwachungseinrichtung kann es sich um eine elektronische Filterstatusüberwachungseinrichtung handeln. Die Filterstatusüberwachungseinrichtung kann zumindest einen Mikroprozessor aufweisen. Die Filterstatusüberwachungseinrichtung kann datenleitend mit dem Sensor verbunden sein. Durch die Filterstatusüberwachungseinrichtung kann der Verbrauchsstatus des Flüssigkeitsfilters, das Ende der Lebensdauer des Flüssigkeitsfilters und/oder das Erreichen der Verschleißgrenze des Flüssigkeitsfilters bestimmbar sein. Die Filterstatusüberwachungseinrichtung kann einen Timer und/oder eine Einrichtung zur Bestimmung einer Abgabemenge des Wassers bzw. des Mischwassers über den zumindest einen Flüssigkeitsablauf aufweisen. Die Filterstatusüberwachungseinrichtung kann datenleitend und/oder stromleitend mit der Anzeige verbunden sein. Die Filterstatusüberwachungseinrichtung kann über die Anzeige dem Benutzer das Ende der Lebensdauer des Flüssigkeitsfilters und/oder das Erreichen der Verschleißgrenze des Flüssigkeitsfilters beispielsweise nach Abgabe einer bestimmten Menge des Wassers bzw. Mischwassers (zum Beispiel 12.000 Liter), nach Ablauf einer bestimmten Zeitspanne einer Nichtnutzung der Sanitärarmatur (zum Beispiel zwei Wochen) und/oder nach Ablauf einer Nutzungsdauer des Flüssigkeitsfilters (zum Beispiel ein Jahr) signalisieren. Die Sanitärarmatur kann eine Energiequelle, zum Beispiel zumindest eine Batterie, für den Sensor und/oder die Filterstatusüberwachungseinrichtung aufweisen.

Die Filterstatusüberwachungseinrichtung kann durch ein Verstellen der Kappe zwischen der Filter-in-Stellung und der Filter-raus-Stellung rückstellbar sein. Beispielsweise kann die Filterstatusüberwachungseinrichtung durch das Verstellen der Kappe aus der Filter-in-Stellung in die Filter-raus-Stellung rückstellbar sein. Unter Rückstellen kann insbesondere verstanden werden, dass die durch die Filterstatusüberwachungseinrichtung bestimmte Menge des abgegebenen Wassers bzw. Mischwassers (zum Beispiel auf 0 Liter), Zeitspanne der nicht Nutzung der Sanitärarmatur (zum Beispiel auf 0 Minuten) und/oder Nutzungsdauer des Flüssigkeitsfilters (zum Beispiel auf 0 Minuten) rückgestellt wird.

Einem weiteren Aspekt folgend wird ein Verfahren zum Betrieb einer hier beschriebenen Sanitärarmatur vorgeschlagen, das zumindest die folgenden Schritte aufweist:
a) Detektieren einer Stellung einer Kappe zum Verschließen einer Filteröffnung; und
b) Aktivieren einer Filterstatusüberwachungseinrichtung, wenn sich die Kappe in einer Filter-in-Stellung befindet, oder Deaktivieren der Filterstatusüberwachungseinrichtung, wenn sich die Kappe in einer Filter-raus-Stellung befindet.

Das Detektieren der Stellung der Kappe erfolgt in Schritt a) insbesondere mit Hilfe des Sensors der Sanitärarmatur. In Schritt b) wird die Filterstatusüberwachungseinrichtung der Sanitärarmatur aktiviert, wenn sich die Kappe in der Filter-in-Stellung befindet, oder deaktiviert, wenn sich die Kappe in der Filter-raus-Stellung befindet. Die Filterstatusüberwachungseinrichtung ist insbesondere aktiviert, wenn sich die Filterstatusüberwachungseinrichtung in einer Betriebssituation befindet, in der die Filterstatusüberwachungseinrichtung den Verbrauchsstatus des Flüssigkeitsfilters, das Ende der Lebensdauer des Flüssigkeitsfilters und/oder das Erreichen der Verschleißgrenze des Flüssigkeitsfilters über die Anzeige anzeigen bzw. signalisieren kann. Die Filterstatusüberwachungseinrichtung ist insbesondere deaktiviert, wenn sich die Filterstatusüberwachungseinrichtung in einer Betriebssituation befindet, in der die Filterstatusüberwachungseinrichtung den Verbrauchsstatus des Flüssigkeitsfilters, das Ende der Lebensdauer des Flüssigkeitsfilters und/oder das Erreichen der Verschleißgrenze des Flüssigkeitsfilters über die Anzeige nicht anzeigen bzw. nicht signalisieren kann. Ist die Filterstatusüberwachungseinrichtung deaktiviert, kann sich die Filterstatusüberwachungseinrichtung in einem Standby-Modus oder Energiesparmodus befinden. Hierdurch ist der Energiebedarf der Filterstatusüberwachungseinrichtung reduzierbar, insbesondere wenn sich kein Flüssigkeitsfilter in der Wasserführung der Sanitärarmatur befindet.

Für weitere Einzelheiten zu dem Verfahren wird vollumfänglich auf die Beschreibung der Sanitärarmatur verwiesen.

Die Erfindung sowie das technische Umfeld werden nachfolgend anhand der Figuren näher erläutert. Es ist darauf hinzuweisen, dass die Figuren eine besonders bevorzugte Ausführungsvariante der Erfindung zeigen, diese jedoch nicht darauf beschränkt ist. Dabei sind gleiche Bauteile in den Figuren mit denselben Bezugszeichen versehen. Es zeigen beispielhaft und schematisch:
- Fig. 1:: eine Sanitärarmatur in einer ersten perspektivischen Darstellung;
- Fig. 2:: die Sanitärarmatur in einer zweiten perspektivischen Darstellung;
- Fig. 3:: die Sanitärarmatur ohne Armaturengehäuse in einem ersten perspektivischen Teilschnitt;
- Fig. 4:: die Sanitärarmatur mit geöffnetem Armaturengehäuse in einem zweiten perspektivischen Teilschnitt;
- Fig. 5:: ein Flüssigkeitsfilter und eine Kappe der Sanitärarmatur in einer perspektivischen Darstellung;
- Fig. 6:: die Kappe in einer perspektivischen Darstellung;
- Fig. 7:: die Sanitärarmatur ohne Armaturengehäuse in einer Seitenansicht mit der Kappe in einer Filter-in-Stellung; und
- Fig. 8:: die Sanitärarmatur ohne Armaturengehäuse in der Seitenansicht mit der Kappe in einer Filter-raus-Stellung.

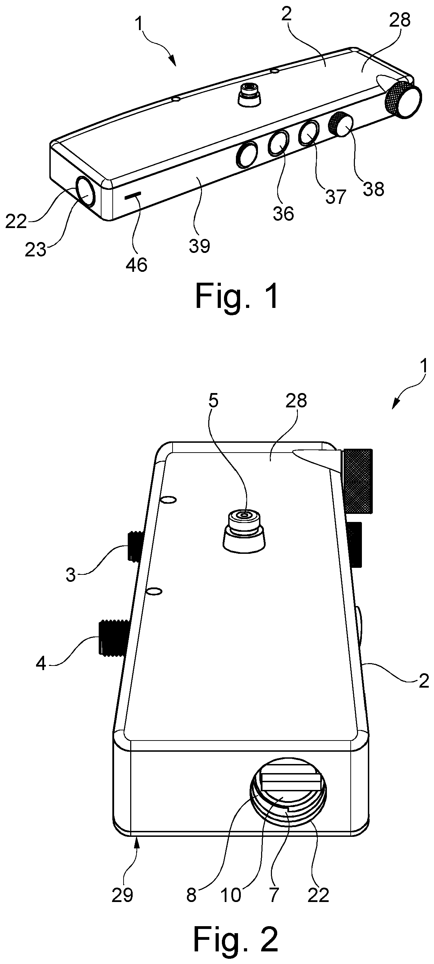

Fig. 1 zeigt eine Sanitärarmatur 1 in einer ersten perspektivischen Darstellung mit Blick auf eine Gehäuseunterseite 28. Die Sanitärarmatur 1 umfasst ein Armaturengehäuse 2 mit einer Gehäusefilteröffnung 22, die in Fig. 1 mit einem Deckel 23 verschlossen ist.

Fig. 2 zeigt die Sanitärarmatur 1 in einer zweiten perspektivischen Darstellung. In Fig. 2 ist der in Fig. 1 gezeigte Deckel 23 aus der Gehäusefilteröffnung 22 entfernt, sodass die Gehäusefilteröffnung 22 geöffnet ist. Durch die Gehäusefilteröffnung 22 ist eine Kappe 10 erkennbar, die eine Filteröffnung 8 einer Wasserführung 7 verschließt. Die Filteröffnung 8 und die Gehäusefilteröffnung 22 fluchten miteinander. Die Sanitärarmatur 1 bzw. das Armaturengehäuse 2 umfasst einen ersten Flüssigkeitszulauf 3 für Kaltwasser und einen zweiten Flüssigkeitszulauf 4 für Warmwasser.

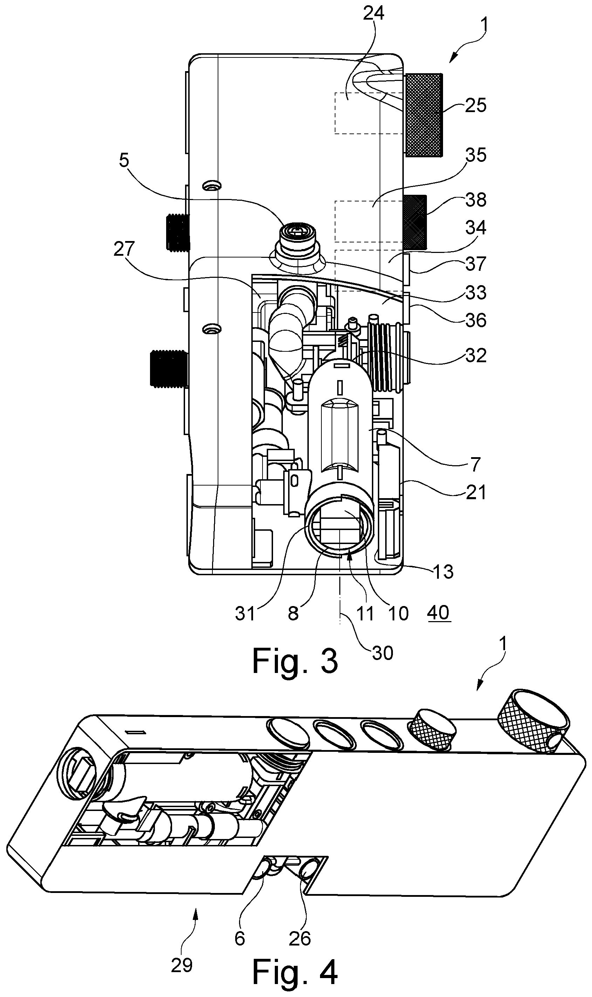

Fig. 3 zeigt die Sanitärarmatur 1 mit dem Armaturengehäuse 2 in einem ersten perspektivischen Teilschnitt. Das Kaltwasser und das Warmwasser sind von den Flüssigkeitszuläufen 3, 4 einem (verdeckt dargestellten) Mischventil 24 zuführbar, mit dem das Kaltwasser und das Warmwasser zu Mischwasser mit einer gewünschten Mischwassertemperatur mischbar sind. Die Mischwassertemperatur ist von einem Benutzer der Sanitärarmatur 1 über ein Temperatureinstellelement 25 einstellbar. Bei dem Temperatureinstellelement 25 handelt es sich hier um einen Drehgriff. Das Mischwasser ist von dem Mischventil 24 über Flüssigkeitskanäle 27 einem ersten Flüssigkeitsablauf 5, einem in Fig. 4 gezeigten zweiten Flüssigkeitsablauf 6 und einem in Fig. 4 gezeigten dritten Flüssigkeitsablauf 26 zuführbar. Der erste Flüssigkeitsablauf 5 ist an der in Fig. 1 und 2 gezeigten Gehäuseunterseite 28 des Armaturengehäuses 2 ausgebildet. Der zweite Flüssigkeitsablauf 6 und der dritte Flüssigkeitsablauf 26 sind an einer in Fig. 4 gezeigten Gehäuseoberseite 29 des Armaturengehäuses 2 ausgebildet.

Das Mischwasser durchströmt auf dem Weg von dem Mischventil 24 zu dem ersten Flüssigkeitsablauf 5 die Wasserführung 7. Die Strömung des Mischwassers zu der Wasserführung 7 ist mit Hilfe eines ersten Ventils 33 steuerbar. Das erste Ventil 33 ist über ein erstes Ventileinstellelement 36 betätigbar. Bei dem ersten Ventileinstellelement 36 handelt es sich um einen Druckknopf. Die Strömung des Mischwassers von dem Mischventil 24 zu dem zweiten Flüssigkeitsablauf 6 ist mit Hilfe eines zweiten Ventils 34 steuerbar (verdeckt dargestellt). Das zweite Ventil 34 ist über ein zweites Ventileinstellelement 37 betätigbar. Bei dem zweiten Ventileinstellelement 37 handelt es sich um einen Druckknopf. Die Strömung des Mischwassers von dem Mischventil 24 zu dem dritten Flüssigkeitsablauf 26 ist mit Hilfe eines dritten Ventils 35 steuerbar (verdeckt dargestellt). Das dritte Ventil 35 ist über ein drittes Ventileinstellelement 38 betätigbar. Die Ventileinstellelemente 36, 37, 38 sind an einer in Fig. 1 gezeigten Gehäusefrontseite 39 des Armaturengehäuses 2 angeordnet.

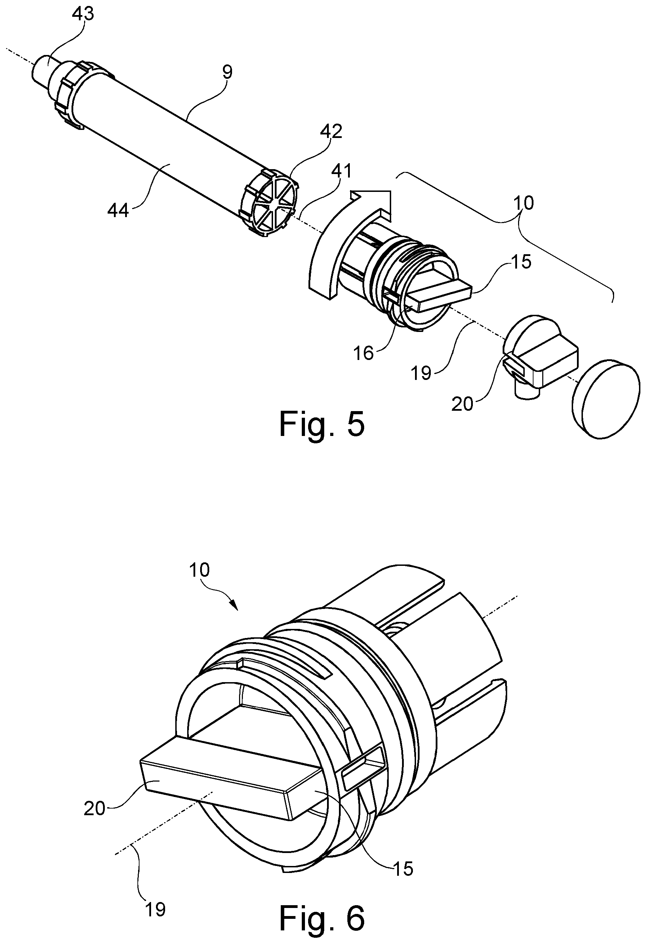

Die Wasserführung 7 ist rohrförmig ausgebildet und erstreckt sich entlang einer Wasserführungslängsachse 30 von einem ersten längsseitigen Wasserführungsende 31 zu einem zweiten längsseitigen Wasserführungsende 32. Die Wasserführung 7 weist an dem ersten längsseitigen Wasserführungsende 31 die Filteröffnung 8 auf, die in Fig. 3 durch die Kappe 10 verschlossen ist, sodass aus der Filteröffnung 8 kein Mischwasser in eine Umgebung 40 austreten kann. Die Kappe 10 ist aus der Filteröffnung 8 entfernbar, sodass durch die Filteröffnung 8 (und die in Fig. 2 gezeigte Gehäusefilteröffnung 22) ein in Fig. 5 gezeigter Flüssigkeitsfilter 9 anordenbar ist. In Fig. 3 befindet sich die Kappe 10 in einer Filter-in-Stellung 11. Die Kappe 10 wird durch den Benutzer der Sanitärarmatur 1 oder einen Monteur in die Filter-in-Stellung 11 gestellt, wenn in der Wasserführung 7 der in Fig. 5 gezeigte Flüssigkeitsfilter 9 angeordnet ist. Die Sanitärarmatur 1 weist einen Sensor 13 auf, der (datenleitend) mit einer Filterüberwachungseinrichtung 21 der Sanitärarmatur 1 verbunden ist.

Fig. 5 zeigt den Flüssigkeitsfilter 9 und die Kappe 10 in einer perspektivischen Darstellung. Der Flüssigkeitsfilter 9 ist als Filterkartusche ausgebildet. Der Flüssigkeitsfilter 9 erstreckt sich entlang einer Filterlängsachse 41 von einem ersten längsseitigen Filterende 42 zu einem zweiten längsseitigen Filterende 43. Das Mischwasser kann über eine Filterumfangsfläche 44 des Flüssigkeitsfilters 9 in den Flüssigkeitsfilter 9 eintreten und über das zweite längsseitige Filterende 43 aus dem Flüssigkeitsfilter 9 austreten. Der Flüssigkeitsbehälter 9 ist parallel zu seiner Filterlängsachse 41 und parallel zu der in Fig. 3 gezeigten Wasserführungslängsachse 30 durch die Filteröffnung 8 in der Wasserführung 7 anordenbar. Wenn sich der Flüssigkeitsfilter 9 in der Wasserführung 7 befindet, kann die Filterlängsachse 41 parallel oder koaxial zu der in Fig. 3 gezeigten Wasserführungslängsachse 30 verlaufen. Die Kappe 10 umfasst einen Aufsatz 20 mit einer ersten Abstandsdetektionsfläche 15 und einer zweiten Abstandsdetektionsfläche 16, die sich (in Bezug auf eine Drehachse 19 der Kappe 10) gegenüberliegen bzw. in entgegengesetzte Richtungen orientiert sind.

Fig. 6 zeigt die Kappe 10 mit dem Aufsatz 20 in einer perspektivischen Darstellung mit Blick auf die erste Abstandsdetektionsfläche 15. Die Kappe 10 ist mit dem Aufsatz 20 in der in Fig. 3 gezeigten Filteröffnung 8 um die Drehachse 19 drehbar.

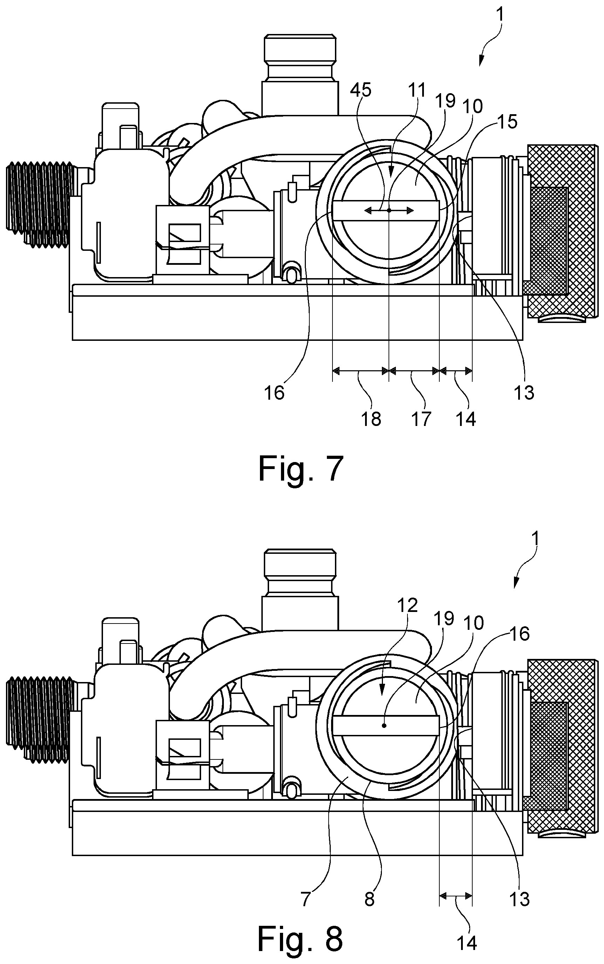

Fig. 7 zeigt die Sanitärarmatur 1 ohne das Armaturengehäuse 2 in einer Seitenansicht. Die Kappe 10 befindet sich in Fig. 7 in der Filter-in-Stellung 11. In der Filter-in-Stellung 11 weist die erste Abstandsdetektionsfläche 15 in Richtung des Sensors 13. Die erste Abstandsdetektionsfläche 15 weist (in einer radialen Richtung 45 der Kappe 10) zu der Drehachse 19 eine erste Distanz 17 und die zweite Abstandsdetektionsfläche 16 (in der radialen Richtung 45 der Kappe 10) zu der Drehachse 19 eine zweite Distanz 18 auf, wobei die zweite Distanz 18 größer als die erste Distanz 17 ist. Wenn sich die Kappe 10 in der Filter-in-Stellung 11 befindet, ist durch den Sensor 13 ein Abstand 14 zwischen dem Sensor 13 und der ersten Abstandsdetektionsfläche 15 detektierbar.

Fig. 8 zeigt die Sanitärarmatur 1 ohne das Armaturengehäuse 2 in der Seitenansicht, wobei die Kappe 10 in der Filteröffnung 8 der Wasserführung 7 aus der in Fig. 7 gezeigten Filter-in-Stellung 11 um 180° um die Drehachse 19 in eine Filter-raus-Stellung 12 gedreht wurde. Die Kappe 10 wird von dem Benutzer der Sanitärarmatur 1 bzw. dem Monteur in die Filter-raus-Stellung 12 gedreht bzw. verstellt, wenn in der Wasserführung 7 kein (in Fig. 5 gezeigter) Flüssigkeitsfilter 9 angeordnet ist. In der Filter-raus-Stellung 12 ist die zweite Abstandsdetektionsfläche 16 in Richtung des Sensors 13 orientiert. Wenn sich die Kappe 10 in der Filter-raus-Stellung 12 befindet, ist durch den Sensor 13 der Abstand 14 zwischen dem Sensor 13 und der zweiten Abstandsdetektionsfläche 16 detektierbar. Der Abstand 14 zwischen dem Sensor 13 und der zweiten Abstandsdetektionsfläche 16 ist in der Filter-raus-Stellung 12 kleiner als der in Fig. 7 gezeigte Abstand 14 zwischen dem Sensor 13 und der ersten Abstandsdetektionsfläche 15 in der Filter-in-Stellung 11. Hierdurch ist mit Hilfe des Sensors 13 detektierbar, ob sich die Kappe 10 in der Filter-in-Stellung 11 oder der Filter-raus-Stellung 12 befindet.

Bei einem Verfahren zum Betrieb der Sanitärarmatur 1 kann in einem Schritt a) die Stellung 11, 12 der Kappe 10 mithilfe des Sensors 13 detektiert werden. In einem Schritt b) kann die in Fig. 3 gezeigte Filterüberwachungseinrichtung 21 aktiviert werden, wenn sich die Kappe 10 in der Filter-in-Stellung 11 befindet und deaktiviert werden, wenn sich die Kappe 10 in der Filter-raus-Stellung 12 befindet. Wenn die Filterüberwachungseinrichtung 21 aktiviert ist, kann die Filterüberwachungseinrichtung 21 einen Verbrauchsstatus des Flüssigkeitsfilters 9 überwachen. Wenn der Flüssigkeitsfilter 9 verbraucht ist, kann die Filterüberwachungseinrichtung 21 einen notwendigen Filterwechsel über eine in Fig. 1 gezeigte Anzeige 46 signalisieren, sodass der Benutzer der Sanitärarmatur 1 den Flüssigkeitsfilter 9 wechseln kann. Bei der Anzeige 46 handelt es sich hier um eine LED-Anzeige. Wenn die Filterüberwachungseinrichtung 21 deaktiviert ist, wird verhindert, dass die Filterüberwachungseinrichtung 21 über die Anzeige einen erforderlichen Filterwechsel signalisiert, trotz dass in der Wasserführung 7 kein Flüssigkeitsfilter 9 angeordnet ist.

Die vorliegende Erfindung ermöglicht eine zuverlässige Anzeige des Ablaufs der Lebensdauer des Flüssigkeitsfilters 9.

### Bezugszeichenliste

- 1: Sanitärarmatur
- 2: Armaturengehäuse
- 3: erster Flüssigkeitszulauf
- 4: zweiter Flüssigkeitszulauf
- 5: erster Flüssigkeitsablauf
- 6: zweiter Flüssigkeitsablauf
- 7: Wasserführung
- 8: Filteröffnung
- 9: Flüssigkeitsfilter
- 10: Kappe
- 11: Filter-in-Stellung
- 12: Filter-raus-Stellung
- 13: Sensor
- 14: Abstand
- 15: erste Abstandsdetektionsfläche
- 16: zweite Abstandsdetektionsfläche
- 17: erste Distanz
- 18: zweite Distanz
- 19: Drehachse
- 20: Aufsatz
- 21: Filterüberwachungseinrichtung
- 22: Gehäusefilteröffnung
- 23: Deckel
- 24: Mischventil
- 25: Temperatureinstellelement
- 26: dritter Flüssigkeitsablauf
- 27: Flüssigkeitskanal
- 28: Gehäuseunterseite
- 29: Gehäuseoberseite
- 30: Wasserführungslängsachse
- 31: erstes längsseitiges Wasserführungsende
- 32: zweites längsseitiges Wasserführungsende
- 33: erstes Ventil
- 34: zweites Ventil
- 35: drittes Ventil
- 36: erstes Ventileinstellelement
- 37: zweites Ventileinstellelement
- 38: drittes Ventileinstellelement
- 39: Gehäusefrontseite
- 40: Umgebung
- 41: Filterlängsachse
- 42: erstes längsseitiges Filterende
- 43: zweites längsseitiges Filterende
- 44: Filterumfangsfläche
- 45: radiale Richtung
- 46: Anzeige

## Patentansprüche

1. Sanitärarmatur (1), zumindest aufweisend:
- ein Armaturengehäuse (2) mit zumindest einem Flüssigkeitszulauf (3, 4, 26) und zumindest einem Flüssigkeitsablauf (5, 6);
- eine Wasserführung (7) mit einer Filteröffnung (8) für einen Flüssigkeitsfilter (9);
- eine Kappe (10) zum Verschließen der Filteröffnung (8), wobei die Kappe (10) in eine Filter-in-Stellung (11), wenn sich bei Gebrauch in der Wasserführung ein Flüssigkeitsfilter befindet, und eine Filter-raus-Stellung (12), wenn sich bei Gebrauch in der Wasserführung kein Flüssigkeitsfilter befindet, verstellbar ist;
**dadurch gekennzeichnet, dass**
die Sanitärarmatur (1) ferner
- einen Sensor (13) zur Detektion der Stellung (11, 12) der Kappe (10) aufweist.

2. Sanitärarmatur (1) nach Patentanspruch 1, wobei die Kappe (10) in die Filter-in-Stellung (11) und die Filter-raus-Stellung (12) drehbar ist.

3. Sanitärarmatur (1) nach einem der vorhergehenden Patentansprüche, wobei die Stellung (11, 12) der Kappe (10) durch den Sensor (13) berührungslos detektierbar ist.

4. Sanitärarmatur (1) nach einem der vorhergehenden Patentansprüche, wobei die Stellung (11, 12) der Kappe (10) durch den Sensor (13) durch Bestimmung eines Abstands (14) detektierbar ist.

5. Sanitärarmatur (1) nach einem der vorhergehenden Patentansprüche, wobei die Kappe (10) eine erste Abstandsdetektionsfläche (15) und eine zweite Abstandsdetektionsfläche (16) aufweist.

6. Sanitärarmatur (1) nach Patentanspruch 5, wobei sich die erste Abstandsdetektionsfläche (15) und die zweite Abstandsdetektionsfläche (16) gegenüberliegen.

7. Sanitärarmatur (1) nach Patentanspruch 5 oder 6, wobei die erste Abstandsdetektionsfläche (15) eine erste Distanz (17) zu einer Drehachse (19) der Kappe (10) und die zweite Abstandsdetektionsfläche (16) eine zweite Distanz (18) zu der Drehachse (19) der Kappe (10) aufweisen.

8. Sanitärarmatur (1) nach einem der Patentansprüche 5 bis 7, wobei die erste Abstandsdetektionsfläche (15) und die zweite Abstandsdetektionsfläche (16) an einem Aufsatz (20) der Kappe (10) ausgebildet sind.

9. Sanitärarmatur (1) nach einem der vorhergehenden Patentansprüche, aufweisend eine Filterstatusüberwachungseinrichtung (21).

10. Sanitärarmatur (1) nach Patentanspruch 9, wobei die Filterstatusüberwachungseinrichtung (21) durch ein Verstellen der Kappe (10) zwischen der Filter-in-Stellung (11) und der Filter-raus-Stellung (12) rückstellbar ist.

11. Verfahren zum Betrieb einer Sanitärarmatur (1) nach einem der vorhergehenden Patentansprüche, aufweisend die folgenden Schritte:
a) Detektieren einer Stellung (11, 12) einer Kappe (10) zum Verschließen einer Filteröffnung (8); und
b) Aktivieren einer Filterstatusüberwachungseinrichtung (21), wenn sich die Kappe (10) in einer Filter-in-Stellung (11) befindet, oder Deaktivieren der Filterstatusüberwachungseinrichtung (21), wenn sich die Kappe (10) in einer Filter-raus-Stellung (12) befindet.

## Claims

1. A sanitary fitting (1), at least having:
- a fixture housing (2) with at least one liquid inflow (3, 4, 26) and at least one liquid outflow (5, 6);
- a water conduit (7) with a filter opening (8) for a liquid filter (9);
- a cap (10) for closing the filter opening (8), wherein the cap (10) can be shifted to a filter-in position (11) when a liquid filter is located in the water conduit during use, and to a filter-out position (12) when no liquid filter is located in the water conduit during use;
**characterized in that** the sanitary fitting (1) further has
- a sensor (13) for detecting the position (11, 12) of the cap (10).

2. The sanitary fitting (1) according to claim 1, wherein the cap (10) can be rotated into the filter-in position (11) and the filter-out position (12).

3. The sanitary fitting (1) according to any one of the preceding claims, wherein the position (11, 12) of the cap (10) can be detected by the sensor (13) in a contact-free manner.

4. The sanitary fitting (1) according to any one of the preceding claims, wherein the position (11, 12) of the cap (10) is detectable by the sensor (13) by determining a distance (14).

5. The sanitary fitting (1) according to any one of the preceding claims, wherein the cap (10) has a first distance detection surface (15) and a second distance detection surface (16).

6. The sanitary fitting (1) according to claim 5, wherein the first distance detection surface (15) and the second distance detection surface (16) are opposite one another.

7. The sanitary fitting (1) according to claim 5 or 6, wherein the first distance detection surface (15) is at a first distance (17) from a rotational axis (19) of the cap (10) and the second distance detection surface (16) is at a second distance (18) from the rotational axis (19) of the cap (10).

8. The sanitary fitting (1) according to any one of claims 5 to 7, wherein the first distance detection surface (15) and the second distance detection surface (16) are formed on an attachment (20) of the cap (10).

9. The sanitary fitting (1) according to any one of the preceding claims, having a filter status monitoring device (21).

10. The sanitary fitting (1) according to claim 9, wherein the filter status monitoring device (21) can be reset by shifting the cap (10) between the filter-in position (11) and the filter-out position (12).

11. A method for operating a sanitary fitting (1) according to any one of the preceding claims, having the following steps:
a) detecting a position (11, 12) of a cap (10) for closing a filter opening (8); and
b) activating a filter status monitoring device (21) when the cap (10) is in a filter-in position (11), or deactivating the filter status monitoring device (21) when the cap (10) is in a filter-out position (12).

## Revendications

1. Robinetterie sanitaire (1), comportant au moins :
- un corps de robinetterie (2), pourvu d'au moins une arrivée (3, 4, 26) de liquide et d'au moins une évacuation (5, 6) de liquide ;
- une conduite d'eau (7), pourvue d'un orifice de filtration (8) pour un filtre à liquide (9) ;
- un capuchon (10), destiné à fermer l'orifice de filtration (8), le capuchon (10) étant réglable dans une position rentrée (11) du filtre, lorsque lors de l'utilisation, un filtre à liquide se trouve dans la conduite d'eau et dans une position sortie (12) du filtre, lorsque lors de l'utilisation, aucun filtre à liquide ne se trouve dans la conduite d'eau ;
**caractérisée en ce que** la robinetterie sanitaire (1) comporte par ailleurs :
- un capteur (13), destiné à détecter la position (11, 12) du capuchon (10).

2. Robinetterie sanitaire (1) selon la revendication 1 du brevet, le capuchon (10) étant rotatif dans la position rentrée (11) du filtre et dans la position sortie (12) du filtre.

3. Robinetterie sanitaire (1) selon l'une quelconque des revendications précédentes du brevet, la position (11, 12) du capuchon (10) étant détectable sans contact par le capteur (13).

4. Robinetterie sanitaire (1) selon l'une quelconque des revendications précédentes du brevet, la position (11, 12) du capuchon (10) étant détectable par le capteur (13) par la détermination d'un écart (14).

5. Robinetterie sanitaire (1) selon l'une quelconque des revendications précédentes du brevet, le capuchon (10) comportant une première surface de détection (15) d'écart et une deuxième surface de détection (16) d'écart.

6. Robinetterie sanitaire (1) selon la revendication 5 du brevet, la première surface de détection (15) d'écart et la deuxième surface de détection (16) d'écart étant placées en vis-à-vis.

7. Robinetterie sanitaire (1) selon la revendication 5 ou 6 du brevet, la première surface de détection (15) d'écart présentant une première distance (17) par rapport à un axe de rotation (19) du capuchon (10) et la deuxième surface de détection (16) d'écart présentant une deuxième distance (18) par rapport à l'axe de rotation (19) du capuchon (10).

8. Robinetterie sanitaire (1) selon l'une quelconque des revendications 5 à 7 du brevet, la première surface de détection (15) d'écart et la deuxième surface de détection (16) d'écart étant conçues sur un embout (20) du capuchon (10).

9. Robinetterie sanitaire (1) selon l'une quelconque des revendications précédentes du brevet, comportant un dispositif de supervision (21) de l'état du filtre.

10. Robinetterie sanitaire (1) selon la revendication 9 du brevet, le dispositif de supervision (21) de l'état du filtre pouvant être rappelé par un réglage du capuchon (10) entre la position rentrée (11) du filtre et la position sortie (12) du filtre.

11. Procédé opérationnel d'une robinetterie sanitaire (1) selon l'une quelconque des revendications précédentes du brevet, comportant les étapes suivantes consistant à :
a) détecter une position (11, 12) d'un capuchon (10) destiné à fermer un orifice de filtration (8) ; et
b) activer un dispositif de supervision (21) de l'état du filtre, lorsque le capuchon (10) se trouve dans une position rentrée (11) du filtre ou désactiver le dispositif de supervision (21) de l'état du filtre, lorsque le capuchon (10) se trouve dans une position sortie (12) du filtre.
